# EUROPÄISCHE PATENTSCHRIFT

(11) **EP 1 464 475 B1**
(45) Veröffentlichungstag und Bekanntmachung des Hinweises auf die Patenterteilung: **20.07.2005**
(21) Anmeldenummer: 03100890.7
(22) Anmeldetag: 03.04.2003
(51) Int. Cl.: B32B 3/02, E04C 2/30, B60R 13/08

(54) **Sandwichplatte**
Sandwich panel
Panneau sandwich

(43) Veröffentlichungstag der Anmeldung: 06.10.2004
(73) Patentinhaber: Ford Global Technologies, LLC, Dearborn, MI 48126 (US)
(72) Erfinder: Greisert, Carsten, 52249, Eschweiler (DE); Hallfeldt, Torsten, 52249, Eschweiler (DE); Wesemann, Juergen, 52477, Alsdorf (DE)
(74) Vertreter: Drömer, Hans-Carsten, Dr.-Ing.

(56) Entgegenhaltungen:
- EP-A- 0 441 466
- EP-A- 0 466 513
- EP-A- 0 636 517
- DE-B- 1 275 885
- US-A- 4 223 073
- US-A1- 2002 172 835

## Beschreibung

Die Erfindung betrifft eine Sandwichplatte gemäß dem Oberbegriff des Patentanspruches 1 und Verfahren zur Herstellung derselbigen.

Eine gattungsgemäße Sandwichplatte ist aus der DE 40 15 169 bekannt. Auf eine erste Blechlage wird punktuell oder bereichsweise eine schalldämmende Zwischenschicht aufgebracht, und hierauf eine weitere Blechlage aufgelegt, wonach die Blechlage miteinander verbunden werden, wodurch ein mehrlagiges Stahlblech entsteht. Dabei ist das schalldämmende Material zumindest teilweise zwischen den Blechlagen verteilt. Des Weiteren werden die Blechlagen durch Punktschweißungen miteinander verbunden, vorzugsweise in den Bereichen ohne Zwischenschicht.

Eine weitere gattungsgemäße Sandwichplatte ist aus der DE 298 23 412 O1 bekannt. Ein zusammengesetztes Blechformteil ist dadurch gekennzeichnet, daß zwischen Verbindungsflächen von aufeinander liegenden Blechen zwischen Schweißpunkten Hohlräume gebildet sind, in denen Dämpfungsmaterial angeordnet ist. Auch hier sind die aufeinander liegenden Bleche in dem Bereich ohne Dämpfungsmaterial durch Schweißpunkte miteinander verbunden.

Eine weitere gattungsgemäße Sandwichplatte ist in der DE 100 02 281 offenbart. Zwischen einem Basisblech und einer Deckschicht, beide aus dehnsteifem Material, ist eine Abstandsschicht aus nicht metallischem Material angeordnet. Die Abstandsschicht weist über ihre Fläche verteilt Ausnehmungen auf, innerhalb derer die Deckschicht jeweils punktuell durch einen Kleber unmittelbar mit dem Basisblech verklebt ist.

Bei allen gattungsgemäßen Sandwichplatten ist es erforderlich, daß die beiden Deckschichten zumindest in Bereichen ohne Zwischenschicht verbunden sein müßen. Dies ist auch dann erforderlich, wenn die Sandwichplatte an einer Unterstruktur befestigt wird. Dann erfolgt die Befestigung zwischen Unter- und Oberschicht durch gleichzeitige Fügung mit der Unterstruktur.

Demnach ist es die Aufgabe der Erfindung, eine Sandwichplatte zu schaffen, die einen einfachen Aufbau aufweist und eine sichere festigkeitsmäßige Verbindung mit einer Unterstruktur zuläßt bei geringem Fertigungsaufwand.

Gelöst wird diese Aufgabe mit den Merkmalen des Patentanspruches 1.

Indem die Unterschicht zumindest teilweise in den Bereichen ohne Zwischenschicht eine größere Dicke aufweist als im überwiegenden Bereich mit Zwischenschicht, kann die Unterschicht im Bereich der größeren Dicke direkt mit einer Unterstruktur gefügt werden. Die Schicht unterschiedlicher Dicke kann u.a. durch flexibel gewalzte oder verschweißte Platinen bestehen. Im Bereich der größeren Dicke können die resultierenden Kraftspitzen aufgrund von Fügungen wesentlich besser von der Unterschicht aufgenommen werden, wie das der Fall wäre, wenn die Unterschicht über ihre gesamte Fläche eine konstante Dicke aufweisen würde. Eine solche Sandwichplatte weist im Bereich mit Zwischenschicht alle Vorteile bekannter Sandwichplatten auf, d.h., große Biegesteifigkeit und gute Dämpfungseigenschaften. Im Bereich von Fügestellen dagegen, wo die Unterschicht eine größere Dicke aufweist, weist sie die Vorteile homogener Platten auf, die aufgrund ihrer Dicke problemlos durch bekannte Fügeverfahren mit anderen Strukturen gefügt werden können, z.B. durch Punktschweißen, Nieten, Verschrauben, Kleben, Laserschweißen usw.

Nicht hinderlich für das erfinderische Konzept ist es, wenn die Unterschicht zumindest teilweise in Bereichen mit Zwischenschicht eine größere Dicke aufweist. Eine derartige Ausführung ist dann sinnvoll, wenn die Oberschicht sich nicht wesentlich über die Zwischenschicht erstreckt, und der Bereich der Unterschicht mit der größeren Dicke als Überleitungsbereich der Kräfte aus der Oberschicht in die Unterschicht dient. In einem solchen Fall ist allein die Unterschicht für die Befestigung an einer Unterstruktur zuständig, hingegen die Oberschicht keine direkte Verbindung mit der Unterschicht aufzuweisen braucht.

In einer weiteren Ausführung der Erfindung weist auch die Oberschicht ebenfalls Bereiche mit einer größeren Dicke auf, bevorzugt dort wo auch die Unterschicht eine große Dicke aufweist, so daß in diesen Bereichen eine hochfeste Verbindung zwischen Ober- und Unterschicht und/oder auch mit einer Unterstruktur verfolgen kann.

Die erfinderische Idee ist nicht davon berührt, ob die Oberschicht die gleiche flächenhafte Erstreckung wie die Unterschicht aufweist, eine größere flächenhafte Erstreckung oder eine kleinere flächenhafte Erstreckung. Die Abmessungen sowohl von Unter-, Zwischen- und Oberschicht bemessen sich alleine nach den strukturellen und fertigungsmäßigen Erfordernissen der Sandwichplatte. Nicht hinderlich ist es auch, wenn die Oberschicht zumindest teilweise in Bereichen ohne Zwischenschicht direkt mit der Unterschicht verbunden ist. Dies dient allein der besseren kraftschlüssigen Verbindung zwischen Unter- un d Oberschicht, und erhöht somit die Gesamtsteifigkeit der Sandwichplatte.

In einer besonders vorteilhaften Ausführung weist die Oberschicht die gleiche flächenhafte Erstreckung wie die Zwischenschicht auf. Vorteilhaft hat dann die Unterschicht in all den Bereichen eine größere Dicke, in denen sie sich über die Zwischenschicht flächenmäßig erstreckt, wobei natürlich die größere Dicke sich auch teilweise in den Bereich der Zwischenschicht erstrecken kann. Diese Sandwichplatte weist im Bereich der Ober- und Zwischenschicht die gewünschten hohen Steifigkeitswerte eines Sandwichs auf, und in den Bereichen der großen Dicke der Unterschicht ohne Ober- und Zwischenschicht die gewünschten guten Fügeeigenschaften einer homogenen Platte.

Ein bevorzugtes Verfahren zur Herstellung solcher Sandwichplatten ist, wenn die Unterschicht, Zwischenschicht und Oberschicht aus Endlosbändern bestehen und kontinuierlich zusammengefügt werden, wobei die unterschiedliche flächenhafte Erstreckung der Schichten nur in Querrichtung vorhanden ist. Bevorzugt werden die 3 Schichten durch Walzen miteinander verbunden. Da dies ein kontinuierlicher Prozeß ist, weisen die Schichten bevorzugt in Querrichtung die unterschiedlichen Dicken auf. Zum Beispiel kann die Unterschicht an ihren beiden Längsrändern jeweils einen Streifen mit größerer Dicke aufweisen. In der Mitte im Bereich der geringeren Dicke der Unterschicht ist die Zwischenschicht und die Oberschicht aufgewalzt. Es ist natürlich auch jede andere Kombination von Streifen und Schichten denkbar, d.h., es können auch zwei oder drei Streifen Zwischenschichten mit einer Oberschicht, zwei Streifen Oberschicht oder die Oberschicht entsprechend jeweils der Zwischenschicht aufgebracht werden. Wichtig ist in allen Fällen, daß das zumindest teilweise in den Bereichen, wo keine Zwischenschicht und/oder keine Oberschicht vorhanden ist, die Unterschicht auf jeden Fall eine größere Dicke aufweist.

Bei einem weiteren Verfahren zur Herstellung der Sandwichplatte besteht die Unterschicht aus einem Endlosband und die Zwischenschicht wird mit Unterbrechungen in Längsrichtung auf die Unterschicht aufgebracht. Damit kann eine unterschiedliche Dicke der Unterschicht nicht nur in Querrichtung erreicht werden, sondern auch in Längsrichtung. Zum Beispiel kann dann die Unterschicht in Längsrichtung gesehen, abschnittsweise Streifen mit erhöhter Dicke aufweisen. Herstellungsverfahren für derartige Bleche sind bekannt aus WO 00/21 695, DE 19939166, DE 10037867 und US 2002/0023472. Die Zwischenschicht kann dann als Endlosschicht aufgebracht werden, oder mit Unterbrechung in den Bereichen wo die Unterschicht eine geringe Dicke aufweist. Das gleiche gilt für die Oberschicht, auch diese kann entweder durchgehend auf die Zwischenschicht aufgebracht sein, unabhängig davon, ob die Zwischenschicht unterbrochen ist in Längsrichtung oder nicht, oder sie kann ebenfalls wie die Zwischenschicht auch unterbrochen sein, wobei die Oberschicht sich dabei flächenmäßig über die Zwischenschicht erstrecken kann.

Auf diese Weise entstehen auf der endlosen Unterschicht abschnittsweise Sandwichbleche, die nicht nur an den Längsrändern, sondern auch an den Querrändern eine erhöhte Dicke der Unterschicht aufweisen und somit nicht nur in Längsrichtung, sondern auch in Querrichtung gefügt werden können. Hier ist noch anzumerken, daß die Bereiche der erhöhten Dicke nicht nur am Rand liegen muß, sondern sie können auch mitten in der Sandwichplatte befinden, je nach Anforderungen und Einsatzzweck der Sandwichplatte.

Bevorzugtes Einsatzgebiete für erfindungsgemäße Sandwichplatten sind im Fahrzeugbau Verkleidungsbleche aller Art. Aufgrund der einfachen Fügungen im Bereich der dickeren Unterschicht und der gleichzeitig günstigen Steifigkeits- und Dämpfungseigenschaften im Bereich mit Zwischenschicht ist die Sandwichplatte ein guter Kompromiß zwischen Leichtbau auf der einen Seite und kostengünstiger Fertigung auf der anderen Seite. Selbstverständlich kann die Sandwichplatte auch für alle anderen Anwendungen zum Einsatz kommen, wo diese speziellen Eigenschaften Vorteile bieten, wie Schiffsbau, Flugzeugbau, Bauwesen usw.

Als Materialen für die Sandwichplatte kommen vorzugsweise Metalle wie Aluminium, Magnesium und/oder Stahl für die Unter- und Oberschicht zum Einsatz, bei denen die Bereiche unterschiedlicher Dicken bereits im Grundmaterial eingewalzt sind. Die Zwischenschicht besteht vorzugsweise aus einem Kunststoff wie Polypropylen oder Polyäthylen. Dies stellt jedoch keine Beschränkung dar, vielmehr sind alle aus dem Stand der Technik bekannten Materialen für Sandwichelemente geeignet, die erfindungsgemäße Sandwichplatte zu bilden.

Weitere vorteilhafte Ausgestaltungen der Erfindung sind den folgenden Zeichnungen zu entnehmen. Es zeigen:
- Fig. 1: einen Schnitt durch eine Sandwichplatte mit einer Oberschicht und Zwischenschicht gleicher Erstreckung;
- Fig. 2: einen Schnitt durch eine Sandwichplatte mit einer Oberschicht, die sich über die Zwischenschicht erstreckt;
- Fig. 3: einen Schnitt durch eine Sandwichplatte mit Zwischen- und Oberschicht gleicher Erstreckung, wobei sich beide in den Bereich der größeren Dicke der Unterschicht erstrecken; und
- Fig. 4: einen Schnitt durch eine Sandwichplatte, wobei Ober- und Unterschicht gleiche Erstreckungen aufweisen.

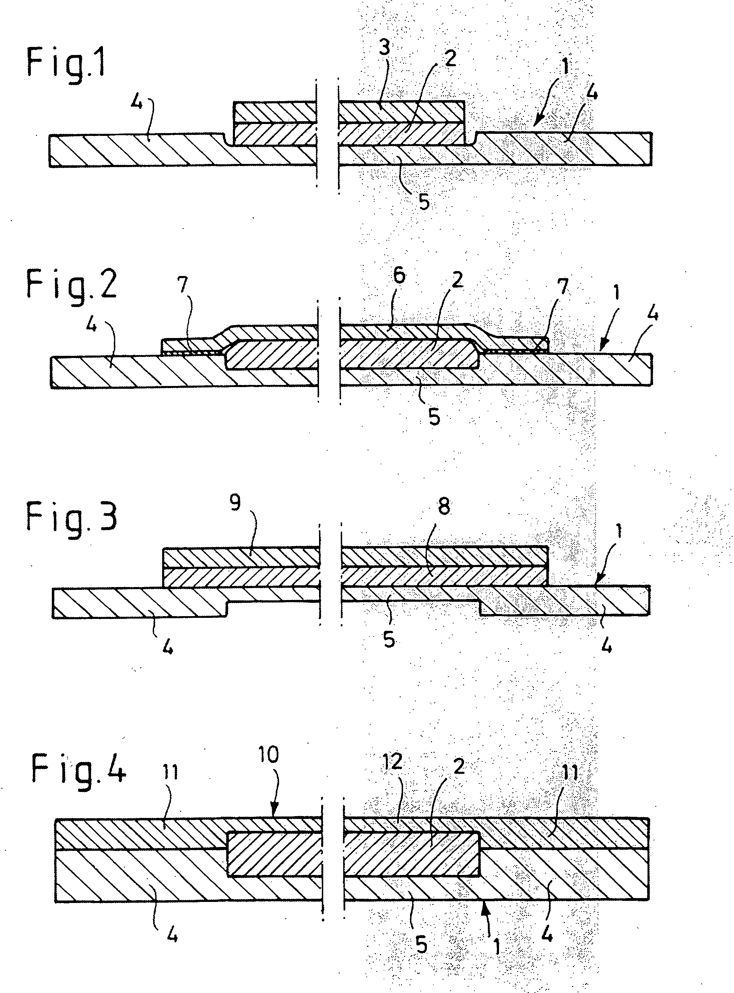

Die Sandwichplatte in Fig. 1 besteht aus einer Unterschicht 1, einer Zwischenschicht 2 und einer Oberschicht 3, wobei die Unterschicht Bereiche mit großer Dicke 4 und geringer Dicke 5 aufweist. Die Zwischenschicht 2 ist auf die Unterschicht 1 nur im Bereich der geringen Dicke 5 aufgebracht. Die Oberschicht 3 weist in Querrichtung die gleiche Erstreckung wie die Zwischenschicht 2 auf. Diese Sandwichplatte ist sehr einfach herzustellen, da die Zwischenschicht 2 und die Oberschicht 3 ohne großen fertigungstechnischen Aufwand auf die Unterschicht 1 aufgebracht werden können. Vorteilhaft wird diese Sandwichplatte im Bereich der großen Dicke 4 mit einer beliebigen Unterstruktur verbunden, durch die dort große Dicke der Unterschicht 1 ist eine ausreichende Festigkeit gewährleistet. Im Bereich von Zwischenschicht 2, Oberschicht 3 und Unterschicht 1 weist die Sandwichplatte durch die große Bauhöhe wesentlich höhere Biegesteifigkeit und ein besseres Dämpfungsverhalten auf als im Bereich großer Dicke 4.

Fig. 2 zeigt prinzipiell den gleichen Aufbau wie Fig. 1. Lediglich die Oberschicht 6 erstreckt sich jetzt in den Bereich der größeren Dicke 4. Dadurch ist es möglich, daß zwischen Oberschicht 6 und Unterschicht 1 im Bereich der großen Dicke 4 eine direkte feste Verbindung durch die Verklebung 7 erfolgt. Dabei kann die Verklebung auch durch jedes andere geeignete Fügeverfahren ersetzt werden.

Fig. 3 zeigt eine weitere Sandwichplatte, die wieder aus der Unterschicht 1 besteht, wobei sich hier die Zwischenschicht 8 in den Bereich der größeren Dicke 4 erstreckt. Die Oberschicht 9 weist dabei die gleiche Erstreckung wie die Zwischenschicht 8 auf. Hier erfolgt keine direkte Verbindung zwischen Unterschicht 1 und Oberschicht 9. Dies ist auch nicht immer erforderlich; wenn die Überlappung zwischen Oberschicht 9 und Unterschicht 1 im Bereich der großen Dicke 4 weit genug ist, ist die Zwischenschicht 8 in der Lage, Kräfte vom Bereich großer Dicke 4 über die Zwischenschicht 8 in die Oberschicht 9 zu leiten. Diese Ausführung ist insofern besonders vorteilhaft, weil hier die volle Tragfähigkeit des Bereiches großer Dicke 4 der Unterschicht 1 zum Einsatz kommt, z. B. bei Fügungen, gleichzeitig aber durch die Übertragung der Kräfte auf die Oberschicht 9 der Bereich mit Unterschicht 1, Zwischenschicht 8 und Oberschicht 9 die volle Tragfähigkeit der Sandwichplatte entfalten kann.

In Fig. 4 erstreckt sich die Oberschicht 10 über die gesamte Breite der Unterschicht 1. Dabei weist die Oberschicht 10 genau gegenüberliegend der Unterschicht 1 ebenfalls Bereiche mit erhöhter Dicke 11 auf. Ein solcher Aufbau wird vorteilhaft eingesetzt, wenn im Bereich der großen Dicken 4 und 11 von Unterschicht 1 und Oberschicht 10 große Kräfte über Fügungen in die Sandwichplatte eingeleitet werden müssen; dies erfolgt dann hier direkt in die Unterschicht 1 und die Oberschicht 10, die im Bereich der großen Dicken 4 und 11 quasi eine homogene Struktur darstellen. Dagegen wird im Bereich der geringen Dicken 5 und 12 von Unterschicht 1 und Oberschicht 10 überwiegende die recht hohe Biegesteifigkeit in Verbindung mit einem spezifisch geringen Gewicht und Dämpfungseigenschaft der Sandwichplatte gebraucht.

Selbstverständlich ist die Erfindung nicht auf die gezeigten Beispiele beschränkt, sondern es ist jede Merkmalskombination denkbar, die von der Beschreibung und den Ansprüchen erwähnt wird. Insbesondere gilt anzumerken, daß die Erstreckung, wie in den Figuren 1 bis 4 gezeigt, sowohl in Querrichtung der Sandwichplatte als auch in Längsrichtung der Sandwichplatte anzuwenden sind.

## Patentansprüche

1. Sandwichplatte, mit einer Unterschicht (1), einer Zwischenschicht (2) und einer Oberschicht (3), wobei die Zwischenschicht (2) zumindest abschnittsweise eine geringere flächenhafte Erstreckung aufweist als die Unterschicht (1),
**dadurch gekennzeichnet, daß**
die Unterschicht (1) zumindest teilweise in den Bereichen ohne Zwischenschicht (2) eine größere Dicke (4) aufweist.

2. Sandwichplatte nach Anspruch 1,
**dadurch gekennzeichnet, daß**
die Unterschicht (1) zumindest teilweise in Bereichen mit Zwischenschicht (8) eine größere Dicke (4) aufweist.

3. Sandwichplatte nach Anspruch 1 oder 2,
**dadurch gekennzeichnet, daß**
die Oberschicht (10) ebenfalls Bereiche mit einer größeren Dicke (11) aufweist.

4. Sandwichplatte nach einem der Ansprüche 1 bis 3,
**dadurch gekennzeichnet, daß**
die Oberschicht (10) die gleiche flächenhafte Erstreckung wie die Unterschicht (1) aufweist.

5. Sandwichplatte nach einem der Ansprüche 1 bis 3,
**dadurch gekennzeichnet, daß**
die Oberschicht die eine größere flächenhafte Erstreckung als die Unterschicht aufweist.

6. Sandwichplatte nach einem der Ansprüche 1 bis 3,
**dadurch gekennzeichnet, daß**
die Oberschicht (6) eine kleinere flächenhafte Erstreckung wie die Unterschicht (1), aber eine größere wie die Zwischenschicht (2) aufweist.

7. Sandwichplatte nach einem der Ansprüche 4 bis 6,
**dadurch gekennzeichnet, daß**
die Oberschicht (6) zumindest teilweise in Bereichen ohne Zwischenschicht (2) direkt mit der Unterschicht (1) verbunden ist.

8. Sandwichplatte nach Anspruch 1 oder 2,
**dadurch gekennzeichnet, daß**
die Oberschicht (3, 9) die gleiche flächenhafte Erstreckung wie die Zwischenschicht (2, 8) aufweist.

9. Verfahren zur Herstellung einer Sandwichplatte nach einem der vorherigen Ansprüche,
**dadurch gekennzeichnet, daß**
die Unterschicht (1), Zwischenschicht (2, 8) und Oberschicht (3, 6, 9, 10) aus Endlosbändem bestehen und kontinuierlich zusammengefügt werden, wobei die unterschiedliche flächenhafte Erstreckung der Schichten nur in Querrichtung vorhanden ist.

10. Verfahren zur Herstellung einer Sandwichplatte nach einem der Ansprüche 1 bis 8,
**dadurch gekennzeichnet, daß**
die Unterschicht aus einem Endlosband besteht und die Zwischenschicht mit Unterbrechungen in Längsrichtung auf die Unterschicht aufgebracht ist.

11. Verfahren nach Anspruch 10
**dadurch gekennzeichnet, daß**
die Oberschicht aus einem Endlosband besteht.

12. Verfahren nach Anspruch 10
**dadurch gekennzeichnet, daß**
die Oberschicht mit Unterbrechungen in Längsrichtung auf die Zwischenschicht aufgebracht ist.

## Claims

1. Sandwich panel, having a lower layer (1), an intermediate layer (2) and an upper layer (3), the intermediate layer (2), at least in portions, having a smaller areal extent than the lower layer (1), **characterized in that** the lower layer (1) at least in part has a greater thickness (4) in the regions without intermediate layer (2).

2. Sandwich panel according to Claim 1, **characterized in that** the lower layer (1) at least in part has a greater thickness (4) in regions with intermediate layer (8).

3. Sandwich panel according to Claim 1 or 2, **characterized in that** the upper layer (10) likewise has regions with a greater thickness (11).

4. Sandwich panel according to one of Claims 1 to 3, **characterized in that** the upper layer (10) has the same areal extent as the lower layer (1).

5. Sandwich panel according to one of Claims 1 to 3, **characterized in that** the upper layer has a greater areal extent than the lower layer.

6. Sandwich panel according to one of Claims 1 to 3, **characterized in that** the upper layer (6) has a smaller areal extent than the lower layer (1) but a greater areal extent than the intermediate layer (2).

7. Sandwich panel according to one of Claims 4 to 6, **characterized in that** the upper layer (6) at least in part is directly joined to the lower layer (1) in regions without intermediate layer (2).

8. Sandwich panel according to Claim 1 or 2,
**characterized in that** the upper layer (3, 9) has the same areal extent as the intermediate layer (2, 8).

9. Process for producing a sandwich panel according to the one of the preceding claims, **characterized in that** the lower layer (1), intermediate layer (2, 8) and upper layer (3, 6, 9, 10) consist of endless strips and are joined together continuously, with the different areal extent of the layers being present only in the transverse direction.

10. Process for producing a sandwich panel according to one of Claims 1 to 8, **characterized in that** the lower layer consists of an endless strip and the intermediate layer is applied to the lower layer with interruptions in the longitudinal direction.

11. Process according to Claim 10, **characterized in that** the upper layer consists of an endless strip.

12. Process according to Claim 10, **characterized in that** the upper layer is applied to the intermediate layer with interruptions in the longitudinal direction.

## Revendications

1. Panneau sandwich qui comprend une couche inférieure (1), une couche intermédiaire (2) et une couche supérieure (3), la couche intermédiaire (2) ayant au moins par sections une extension plane moindre que celle de la couche inférieure (1), **caractérisé en ce qu'**au moins dans certaines des régions sans couche intermédiaire (2), la couche inférieure (1) a une épaisseur plus forte (4).

2. Panneau sandwich selon la revendication 1, **caractérisé en ce qu'**au moins dans certaines des régions avec couche intermédiaire (8), la couche inférieure (1) a une épaisseur plus forte (4).

3. Panneau sandwich selon les revendications 1 ou 2, **caractérisé en ce que** la couche supérieure (10) a également des régions d'épaisseur plus forte (11).

4. Panneau sandwich selon l'une des revendications 1 à 3, **caractérisé en ce que** la couche supérieure (10) a la même extension plane que la couche inférieure (1).

5. Panneau sandwich selon l'une des revendications 1 à 3, **caractérisé en ce que** la couche supérieure a une extension plane plus grande que celle de la couche inférieure.

6. Panneau sandwich selon l'une des revendications 1 à 3, **caractérisé en ce que** la couche supérieure (6) a une extension plane plus grande que celle de la couche intermédiaire (2) et plus petite que celle de la couche inférieure (1).

7. Panneau sandwich selon l'une des revendications 4 à 6, **caractérisé en ce que** dans les régions sans couche intermédiaire (2), la couche supérieure (6) est au moins partiellement reliée directement à la couche inférieure (1).

8. Panneau sandwich selon les revendications 1 ou 2, **caractérisé en ce que** la couche supérieure (3, 9) a la même extension plane que la couche intermédiaire (2, 8).

9. Procédé de fabrication d'un panneau sandwich selon l'une des revendications précédentes, **caractérisé en ce que** la couche inférieure (1), la couche intermédiaire (2, 8) et la couche supérieure (3, 6, 9, 10) sont constituées de bandes sans fin et sont assemblées en continu, les différentes étendues planes des couches n'étant présentes que dans la direction transversale.

10. Procédé de fabrication d'un panneau sandwich selon l'une des revendications 1 à 8, **caractérisé en ce que** la couche inférieure est constituée d'une bande sans fin, la couche intermédiaire étant apportée sur la couche inférieure avec des interruptions dans la direction longitudinale.

11. Procédé selon la revendication 10, **caractérisé en ce que** la couche supérieure est constituée d'une bande sans fin.

12. Procédé selon la revendication 10, **caractérisé en ce que** la couche supérieure est apportée sur la couche intermédiaire avec des interruptions dans la direction longitudinale.
